# EUROPEAN PATENT SPECIFICATION

(11) **EP 2 539 376 B1**
(45) Date of publication and mention of the grant of the patent: **05.11.2014**
(21) Application number: 11718801.1
(22) Date of filing: 04.04.2011
(51) Int. Cl.: C08F 10/00, C08F 4/00, C08F 2/34, B01J 8/00

(54) **PROCESS FOR POLYMERIZING OLEFIN-BASED POLYMERS CONTAINING HIGH MOLECULAR WEIGHT FRACTIONS IN CONDENSED AND SUPER-CONDENSED MODE**
POLYMERISATIONSVERFAHREN FÜR OLEFINBASIERTE POLYMERE MIT FRAKTIONEN MIT HOHEM MOLEKULARGEWICHT IN EINEM KONDENSIERTEN UND SUPERKONDENSIERTEN MODUS
PROCÉDÉ DE POLYMÉRISATION DE POLYMÈRES À BASE D'OLÉFINES CONTENANT DES FRACTIONS DE MASSE MOLÉCULAIRE ÉLEVÉE EN MODE CONDENSÉ ET SUPER-CONDENSÉ

(30) Priority: 05.04.2010 US 321078 P
(43) Date of publication of application: 02.01.2013
(73) Proprietor: Dow Global Technologies LLC, Midland, MI 48674 (US)
(72) Inventor: JORGENSEN, Robert, James, Scott Depot WV 25560 (US); REIB, Robert, Hurrcane WV 25526 (US); WHITED, Stephanie, M., Charleston WV 25314 (US); HOGAN, Timothy, J., Laplace LA 70068 (US); CLARK, Darin, G., New Orleans LA 70115-3142 (US); TAMBLING, Troy, M., Lake Jackson TX 77566 (US)
(74) Representative: Dey, Michael
(86) International application number: PCT/US2011/031111
(87) International publication number: WO 2011/126988

(56) References cited:
- EP-A1- 0 043 220
- EP-A1- 0 593 083
- EP-B2- 0 659 773
- WO-A1-98/47611
- WO-A1-2007/071527
- WO-A1-2008/063463
- WO-A2-2004/007562
- US-A- 4 302 566
- US-A- 4 349 648
- US-A- 4 421 523
- US-A- 4 482 687

## Description

### FIELD OF THE INVENTION

The invention provides continuity improvement for the production of very high molecular weight olefin-based polymers in gas phase polymerization reactors in condensed mode operation.

The invention also provides a means to further control the molecular weight distribution of polymers produced with mixed metal Ziegler-Natta type catalysts in gas phase polymerization reactors, independent of catalyst composition changes.

### BACKGROUND OF INVENTION

Catalysts which produce broad molecular weight distributions and high molecular weight tails are desirable for use in both slurry and gas phase polymerization processes, to produce improved products, especially HDPE blow molding resins, where resin swell (caused by high molecular weight chains) is important. However, the production of these polymers with very high molecular weight resin fractions, has been difficult due to reactor operability issues, manifested by very high levels of static (that can cause fines to adhere to surfaces, resulting in poor control and eventual sheeting), formation of reactor agglomerates, and overall system fouling.

In order to access the improved product properties made available by such catalysts (specifically, a catalyst which has multiple components, at least one of which produces very high molecular weight), reactor continuity and agglomerate formation must be resolved. The problem of static "cling" is exacerbated further, when the catalyst system has a positive activation energy, which further increases the tendency to sheet and form agglomerates, thus forcing premature reactor shutdown.

It has previously been discovered that utilizing a mixture of two solid continuity improvement agents ("continuity aids" or "CA"), co-fed to the reactor, separately from the catalyst, allows operation to continue for long periods, without sheet or agglomerate formation that could require reactor shutdown. Surprisingly, catalyst activity was generally unaffected when the continuity aid was added within a prescribed ratio to bed weight. The capability to control static level was also demonstrated. Removal of the continuity aid results in massive fouling of the reactor, and requires cessation of operation, even though symptoms, such as static, are not present. The continuity aids function in the presence of aluminum alkyl cocatalysts that are generally required to achieve full activity of Ziegler-Natta type catalysts. Similar methods have been evaluated with non-Ziegler-Natta type catalysts, such as metallocenes and post-metallocene catalysts, which are generally used without feed of a cocatalyst. The use of CAs were not thought to be applicable to catalyst systems in which cocatalysts are fed to the reactor prior to the teachings of PCT Publication WO2009088701, the disclosure of which is incorporated herein by reference.

There is a need for the production of high molecular weight resins, particularly resins with high molecular weight fractions of >10⁶ g/mole, and preferably as high as 10⁷ g/mole, or more, in amounts greater than two weight percent, and preferably greater than or equal to four weight percent. The production of these types of polymers, with high molecular weight fractions, in fluidized bed, gas phase reactors, has generally been rendered more difficult by agglomerate and sheet formations, which cause reactor shutdowns.

There are a variety of methods that can ameliorate the tendency to form sheets/chunks, ranging from operating in condensed mode, through addition of anti-static agents, or operation at temperatures sufficiently low, such that polymer fusion cannot occur. However, all of these techniques have drawbacks. Many of the anti-static agents that are commercially available rely on the presence of water to function. However, water is a strong poison for all known Ziegler-Natta type catalyst systems.

Operation in condensing mode requires high levels of an induced condensing agent, as well as operation at high overall polymer production rates, which can make the reactor even more sensitive to sheeting conditions. In addition, the elimination or amelioration of static potential does not necessarily equate with good long term performance of the reaction system. Thus, the mere elimination of static does not guarantee that sheeting, agglomerate formation or other operational impairments will not occur.

There are other methods that can result in reduced amounts of sheeting and/or agglomerate formation. However, such other methods have negative affects on the efficiency of the process. Use of an agitated bed alone, according to the prior art, is insufficient to promote highly levels of operability and eliminate hot spots.

One known method of reducing sheeting/agglomerate is to run at very low ethylene partial pressure, such that, even with stagnant zones in the reactor, there is insufficient reactant available to cause sheet/agglomerate formation. One clear drawback to this method is that the overall efficiency of the catalyst system will be substantially reduced. Concomitant with this reduced catalyst efficiency will be reduced polymer particle size, leading to higher fines levels and further reduction in operability. Thus, one must then run the reactor at reduced rates as well, or feed substantially more catalyst to achieve reduced sheeting. Either approach is economically inefficient.

Another known method is to run the reactor at reduced temperature, further increasing the distance between the reaction temperature and the melting or sticking point of the polymer in production. This approach also forces operation at reduced rates, again leading to poor economics for the process, and, unless the catalyst is extremely long-lived, renders multiple reactor operation difficult.

Another method is to run the reactor in condensed mode. However, condensed mode operation does not guarantee that sheeting/agglomerate formation will not occur, especially during the run-up to condensing mode. That is, as polymerization rates are increased, the energy flux in the polymerizing bed must increase, leading to the potential of sheeting/agglomerate formation, before polymerization rates have increased sufficiently to achieve condensed mode operation. Additionally, high levels of static are generally not ameliorated, until a substantial percentage of condensing has occurred. Very high levels of induced condensing agent must be added, resulting in a reduction in the sticking temperature of the polymer, making sheeting and agglomerate formation even more likely.

Another potential solution is to wash the resultant catalyst, removing at least some of the compounds that tend to generate static. This method, however, adds several additional steps to the catalyst preparation, greatly increasing the cost and complexity of catalyst preparation, increasing the potential variability of the catalyst, and, does not prevent sheeting and chunking during production of resins with very high molecular weight fractions.

None of these known methods allow production of polymer at useful rates in commercial scale reactors. There is a need, therefore, to not only control static, but also to produce high molecular weigh polymer, at high polymerization rates, using efficient polymerization processes, without forming sheeting and/or agglomerates in the reactor.

One of the most efficient processes for the production of ethylene polymers and copolymers is the gas phase fluidized bed process. However, in order to maximize efficiency and minimize operation costs of the system, it is best to run the process in what is known as "condensed" or "super-condensed" mode in which a large fraction of the recycle gas is condensed and recycled back into the reactor.

There are, however, many considerations regarding the operability of a gas phase fluidized bed reactor. Ideally, the catalyst system would be inactive at very high temperatures (i.e., close to the melting point of the polymer). Catalyst deactivation is also a consideration in reactor locations with excessive heat, e.g., those portions of the reactor in which resin may accumulate, leading to sheeting or chunk formation. However, the needs of the process are subordinate to the need for production of higher value polymer products. Of particular interest are resins that have a broad molecular weight distribution, a high molecular weight fraction, or tail, that enhance resin swell for applications such as blow molding or pipe extrusion while being produced at high production rates to give good economic performance.

European Patent Publication EP480434A2 discloses a solid component of a catalyst, which includes magnesium, halogen and titanium and is obtainable by (i) dissolving a dialkyl magnesium compound, a silicon halide, and, optionally, an alkyl halide in an inert organic solvent, and maintaining contact until a granular solid precipitates; (ii) reacting the granular solid with a titanium halide, alkoxide or halogen-alkoxide, to produce a solid catalyst component; and (iii) activating this solid component by contacting it with alkyl aluminum halide if a titanium alkoxide or halogen-alkoxide has been used in step (ii). Higher aluminum alkyls, such as tri-n-hexyl aluminum, are disclosed as increasing the melt flow ratio.

U.S. Patent No. 4,368,305 discloses a process for producing polyolefins, and particularly polyethylene, which are high in molecular weight or which are wide in molecular weight distribution, and thus suitable for extrusion or blow molding purposes, the process comprising polymerizing olefins, such as ethylene, by the use of a catalytic system, which is comprised of a solid catalytic component obtained by mixing or interacting oxygen-containing organometal compounds or halides of (a) vanadium and (b) hafnium, or a solid catalytic component obtained by mixing or interacting oxygen- containing organometal compounds or halides of (A) vanadium, (B) hafnium and (C) titanium, and (D) an organoaluminum compound.

U.S. Patent No. 6,054,406 discloses a polymetallic supported catalyst component comprising an activated anhydrous MgCl₂ solid support, which has been treated with at least one treatment of at least two halogen-containing transition metal compounds, wherein one is a halogen-containing titanium metal compound and one is a halogen-containing non- titanium transition metal compound, optionally, in the presence of an electron donor and the processes for producing the component. The catalyst is prepared by reacting this supported catalyst component with an organometallic cocatalyst, optionally in the presence of an electron donor.

U.S. Patent No. 7,348,383 discloses a Ziegler-Natta catalyst composition comprising a solid mixture formed by halogenation of: A1) a spray-dried catalyst precursor comprising the reaction product of a magnesium compound, a non-metallocene titanium compound, and at least one non-metallocene compound of a transition metal other than titanium, with A2) an organoaluminum. halide halogenating agent; a method of preparing precursors for use therein; and olefin polymerization processes using the catalysts prepared from the precursors.

One or more of these needs and others have been met by the various embodiments of the invention.

### SUMMARY OF INVENTION

In a first aspect, the invention provides a process for producing an olefin-based polymer, said process comprising polymerizing at least one monomer, in the gas phase, in the presence of at least the following components: A) at least one catalyst containing at least two transition metals, one of the at least two transition metals being Ti; B) at least one cocatalyst; C) a composition comprising at least one compound selected from formula (I), and/or at least one compound selected from formula (II): (R1CO₂)₂ AlOH (I), (R2)ₓN(R3OH)_{y} (II); wherein R1 is a hydrocarbon radical containing from 13 to 25 carbons; R2 is a hydrocarbon radical containing from 14 to 26 carbons; R3 is a hydrocarbon radical containing from 1 to 4 carbons; and x + y = 3, and x has a value of 1 or 2, in condensed mode where the average height of the fluidized bed is maintained above the neck of the polymerization reactor and with optional feed of other continuity enhancing agents, such as water, alcohols and ketones.

In another aspect, the invention also provides a process for producing an olefin-based polymer, said process comprising polymerizing at least one monomer in the presence of at least the following components: A) a Ziegler Natta type catalyst comprising at least two transition metals; B) a trialkylaluminum compound; C) optionally a composition comprising at least one compound selected from formula (I), and/or at least one compound selected from formula (II): (R1CO₂)₂ AlOH (I), (R2)ₓN(R3OH)_{y} (II); wherein R1 is a hydrocarbon radical containing from 13 to 25 carbons; R2 is a hydrocarbon radical containing from 14 to 26 carbons; R3 is a hydrocarbon radical containing from 1 to 4 carbons; and x + y = 3, and x has a value of 1 or 2 in condensed mode where the average height of the fluidized bed is maintained above the neck of the polymerization reactor and with optional feed of other continuity enhancing agents, such as water, alcohols and ketones.

In a first aspect, the invention provides a process for producing an olefin-based polymer, said process consisting essentially of polymerizing at least one monomer, in the gas phase, in the presence of at least the following components: A) at least one catalyst containing at least two transition metals, one of the at least two transition metals being Ti; B) at least one cocatalyst; C) a composition consisting essentially of at least one compound selected from formula (I), and/or at least one compound selected from formula (II): (R1CO₂)₂ AlOH (I), (R2)ₓN(R3OH)_{y} (II); wherein R1 is a hydrocarbon radical containing from 13 to 25 carbons; R2 is a hydrocarbon radical containing from 14 to 26 carbons; R3 is a hydrocarbon radical containing from 1 to 4 carbons; and x + y = 3, and x has a value of 1 or 2, in condensed mode where the average height of the fluidized bed is maintained above the neck of the polymerization reactor and with optional feed of other continuity enhancing agents, such as water, alcohols and ketones.

In another aspect, the invention also provides a process for producing an olefin-based polymer, said process consisting essentially of polymerizing at least one monomer in the presence of at least the following components: A) a Ziegler Natta type catalyst comprising at least two transition metals; B) a trialkylaluminum compound; C) optionally a composition consisting essentially of at least one compound selected from formula (I), and/or at least one compound selected from formula (II): (R1CO₂)₂ AlOH (I), (R2)ₓN(R3OH)_{y} (II); wherein R1 is a hydrocarbon radical containing from 13 to 25 carbons; R2 is a hydrocarbon radical containing from 14 to 26 carbons; R3 is a hydrocarbon radical containing from 1 to 4 carbons; and x + y = 3, and x has a value of 1 or 2 in condensed mode where the average height of the fluidized bed is maintained above the neck of the polymerization reactor and with optional feed of other continuity enhancing agents, such as water, alcohols and ketones.

In some embodiments of the invention, the polymerization process occurs further in the presence of an effective amount of continuity enhancing agent. In other embodiments of the invention, the polymerization process occurs further in the presence of water. In yet other embodiments of the invention, the polymerization process occurs further in the presence of methanol, ethanol, isopropanol or a mixture of any thereof.

In a specific embodiment of the invention, the cocatalyst is a trialkylaluminum compound.

In another aspect of the invention, component (C) is added continuously to the polymerization reactor. In some embodiments of the invention, the continuity enhancing agent is continuously added to the polymerization reactor.

In one embodiment of the inventive process, the gas phase polymerization takes place in at least one reactor.

In another embodiment, the polymerization process occurs in multiple reactors in series.

Other aspects of the invention provide the reaction products of the inventive processes. In some embodiments, a reaction product comprising a blend, which blend comprises a high molecular weight ethylene-based polymer, and a low molecular weight ethylene-based polymer, and wherein the high molecular weight ethylene-based polymer has a density less than, or equal to, 0.960 g/cm³, and wherein the blend has a high load melt index (I₂₁) greater than, or equal to, 4 g/10 min, and wherein the blend has a molecular weight distribution (M_{w}/Mₙ) greater than, or equal to, 15 is provided.

### BRIEF DESCRIPTION OF THE DRAWINGS

FIG. 1 is a graph of skin thermocouple temperatures readings on the fluidized bed reactor wherein the thermocouples are located at 8 feet above the reactor distributor plate.
FIG. 2 is a graph of skin thermocouple temperatures readings on the fluidized bed reactor wherein the thermocouples are located at 5.5 feet above the reactor distributor plate.
FIG. 3 is a graph of skin thermocouple temperatures readings on the fluidized bed reactor wherein the thermocouples are located at 3 feet above the reactor distributor plate.
FIG. 4 is a graph of skin thermocouple temperatures readings on the fluidized bed reactor wherein the thermocouples are located at 8 feet above the reactor distributor plate of the first reactor in a dual reactor system in which the first reactor is producing a very high molecular weight resin.
FIG. 5 is a graph of skin thermocouple temperatures readings on the fluidized bed reactor wherein the thermocouples are located at 5.5 feet above the reactor distributor plate of the first reactor in a dual reactor system in which the first reactor is producing a very high molecular weight resin.
FIG. 6 is a graph of skin thermocouple temperatures readings on the fluidized bed reactor wherein the thermocouples are located at 3 feet above the reactor distributor plate of the first reactor in a dual reactor system in which the first reactor is producing a very high molecular weight resin.
FIG. 7 is a graph of illustrating reactor static control flow and reactor static in a first reactor of a dual reactor system in which the first reactor is producing a very high molecular weight resin.
FIG. 8 is a graph of illustrating reactor static control flow and reactor static in a second reactor of a dual reactor system in which the first reactor is producing a very high molecular weight resin.
FIG. 9 is a graph illustrating reactor static formation in the first reactor during startup of the polymerization of Comparative Example 1.
FIG. 10 is a graph of skin thermocouple temperatures readings on the fluidized bed reactor wherein the thermocouples are located at 3 feet above the reactor distributor plate for the first reactor in Comparative Example 1.
FIG. 11 is a graph of skin thermocouple temperatures readings on the fluidized bed reactor wherein the thermocouples are located at 3 feet above the reactor distributor plate for the first reactor in Comparative Example 1 and depicts the smooth onset of reaction as catalyst feed is begun and the transition from "dry mode" to condensed mode.
FIG. 12 depicts reactor static during a smooth onset of reaction for Comparative Example 1.

### DETAILED DESCRIPTION OF THE INVENTION

The invention provides a process for producing an olefin-based polymer, said process comprising polymerizing, in a polymerization reactor including a fluidized bed, a disengaging section and a neck connecting the bed and disengaging section, at least one monomer, in the gas phase, in the presence of at least the following components: A) at least one catalyst containing at least two transition metals, one of the at least two transition metals being Ti; B) at least one cocatalyst; C) a composition comprising at least one compound selected from formula (I), and at least one compound selected from formula (II); wherein, (R1CO₂) ₂AlOH = formula (I), (R2)ₓN(R3OH)_{y} = formula (II), R1 is a hydrocarbon radical containing from 13 to 25 carbons, R2 is a hydrocarbon radical containing from 14 to 26 carbons, R3 is a hydrocarbon radical containing from 1 to 4 carbons, and x + y = 3, and x has a value of 1 or 2, the process conducted in a condensed mode where the average height of the fluidized bed is maintained above a neck of the polymerization reactor and with optional feed of effective amounts of continuity enhancing agents, such as water, alcohols and ketones.

The invention further provides a process for producing an olefin-based polymer, said process comprising polymerizing, in a polymerization reactor including a fluidized bed, a disengaging section and a neck connecting the bed and disengaging section, at least one monomer, in the gas phase, in the presence of at least the following components: A) at least one catalyst containing at least two transition metals, one of the at least two transition metals being Ti; B) at least one cocatalyst; C) a composition comprising at least one compound selected from formula (I), and at least one compound selected from formula (II); wherein, (R1CO₂)₂AlOH = formula (I), (R2)ₓN(R3OH)_{y} = formula (II), R1 is a hydrocarbon radical containing from 13 to 25 carbons, R2 is a hydrocarbon radical containing from 14 to 26 carbons, R3 is a hydrocarbon radical containing from 1 to 4 carbons, and x + y = 3, and x has a value of 1 or 2, the process conducted in a condensed mode where the average height of the fluidized bed is maintained above the neck of the polymerization reactor and with optional feed of effective amounts of continuity enhancing agents, such as water, alcohols and ketones.

In one embodiment of the inventive process, the gas phase polymerization takes place in at least one reactor.

In another embodiment, the polymerization process occurs in multiple reactors in series.

In another embodiment of the inventive process, component C is ((R1CO₂)₂ AlOH), where R1 is a hydrocarbon radical containing from 13 to 20 carbons, or alternatively, from 13 to 17 carbons.

In yet another embodiment of the inventive process, component C is ((R2)ₓN(R3OH)_{y}), where R2 is a hydrocarbon radical containing from 14 to 20 carbons, alternatively, from 14 to 17 carbons; and R3 is a hydrocarbon radical containing from 1 to 4 carbons, or alternatively, from 1 to 3 carbons; and x + y = 3, and x has a value of 1 or 2.

In another embodiment of the inventive process, component C consists essentially of a composition comprising at least one compound selected from formula (I), and at least one compound selected from formula (II): (R1CO₂) ₂AlOH (I), (R2) ₓN(R3OH)_{y} (II), wherein R1 is a hydrocarbon radical containing from 13 to 25 carbons, R2 is a hydrocarbon radical containing from 14 to 26 carbons, R3 is a hydrocarbon radical containing from 1 to 4 carbons; and x + y = 3, and x has a value of 1 or 2.

In some embodiments of the inventive process, the composition of Component C further comprises an inert hydrocarbon carrier and in certain embodiments, the inert hydrocarbon carrier is isopentane, hexane or mineral oil.

In one embodiment of the inventive process, the composition of Component C further comprises a mineral oil.

In alternative embodiments, the composition of Component C consists of a composition comprising at least one compound selected from formula (I), and at least one compound selected from formula (II): (R1CO₂) ₂AlOH (I), (R2) ₓN(R3OH)_{y} (II), wherein R1 is a hydrocarbon radical containing from 13 to 25 carbons, R2 is a hydrocarbon radical containing from 14 to 26 carbons, R3 is a hydrocarbon radical containing from 1 to 4 carbons; and x + y = 3, and x has a value of 1 or 2, and an inert hydrocarbon carrier.

In one embodiment of the inventive process, the composition of Component C comprises at least one compound selected from formula (I), (R1CO₂)₂AlOH, where R1 is a hydrocarbon radical containing from 13 to 25 carbons, at least one compound selected from formula (II), (R2)ₓN(R3OH)_{y}, where R2 is a hydrocarbon radical containing from 14 to 26 carbons; and R3 is a hydrocarbon radical containing from 1 to 4 carbons, and x + y = 3, and x has a value of 1 or 2; and an inert hydrocarbon carrier selected from isopentane, hexane and mineral oil.

In one embodiment of the inventive process, the composition of Component C comprises at least one compound selected from formula (I), (R1CO₂)₂AlOH, where R1 is a hydrocarbon radical containing from 13 to 25 carbons, at least one compound selected from formula (II), (R2)ₓN(R3OH)_{y}, where R2 is a hydrocarbon radical containing from 14 to 26 carbons, and R3 is a hydrocarbon radical containing from 1 to 4 carbons, and x + y = 3, and x has a value of 1 or 2; and a mineral oil.

In one embodiment of the inventive process, the composition of Component C comprises at least one compound selected from Formula (I), (R1CO₂)₂AlOH, where R1 is a hydrocarbon radical containing from 13 to 25 carbons; and at least one compound selected from Formula (II), (R2)ₓN(R3OH)_{y}, where R2 is a hydrocarbon radical containing from 14 to 26 carbons, and R3 is a hydrocarbon radical containing from 1 to 4 carbons; and x + y = 3, and x has a value of 1 or 2.

In alternative embodiments, the weight ratio of "the compound selected from Formula (I)" to the "compound selected from Formula (II)" of the composition of Component C may range from "0.5 to 1" to "2 to 1" and is preferably "0.5 to 1" to "1 to 1" by weight

In one embodiment of the inventive process, Component C is fed to the reactor separately from the catalyst and cocatalyst.

In one embodiment of the inventive process, Component C is fed directly to the reactor.

In one embodiment of the inventive process, Component C is initially fed to the reactor simultaneously with the start of the catalyst feed.

In one embodiment of the inventive process, Component C is a solid as fed to the reactor.

In one embodiment of the inventive process, Component C is a slurry as fed to the reactor.

In one embodiment, for an inventive process, Component C comprises at least one compound selected from formula (I), (R1CO₂)₂AlOH, where R1 is a hydrocarbon radical containing from 13 to 25 carbons, and at least one compound selected from formula (II), (R2)ₓN(R3OH)_{y}, where R2 is a hydrocarbon radical containing from 14 to 26 carbons, and R3 is a hydrocarbon radical containing from 1 to 4 carbons, and x + y = 3, and x has a value of 1 or 2, which each are in solid form as fed to the reactor.

In one embodiment, for an inventive process, Component C comprises a compound selected from formula (I), (R1CO₂)₂AlOH, where R1 is a hydrocarbon radical containing from 13 to 25 carbons, which is in solid form as fed to the reactor. In a further embodiment, Component C comprises a compound selected from formula (I), (R1CO₂)₂ AlOH, where R1 is a hydrocarbon radical containing from 13 to 25 carbons, and is a slurry as fed to the reactor.

In one embodiment, for an inventive process, Component C comprises at least one compound selected from formula (II), (R2)ₓN(R3OH)_{y}, where R2 is a hydrocarbon radical containing from 14 to 26 carbons, and R3 is a hydrocarbon radical containing from 1 to 4 carbons, and x + y = 3, and x has a value of 1 or 2, which is in solid form as fed to the reactor. In a further embodiment, Component C at least one compound selected from formula (II), (R2)ₓN(R3OH)_{y}, where R2 is a hydrocarbon radical containing from 14 to 26 carbons, and R3 is a hydrocarbon radical containing from 1 to 4 carbons, and x + y = 3, and x has a value of 1 or 2 and which is a slurry as fed to the reactor.

In one embodiment, for an inventive process, the catalyst is a Ziegler-Natta type catalyst. In a further embodiment, the catalyst comprises at least one metal selected from Mg, Ti, and Hf, and optionally Zr. In a further embodiment, each metal that is present in the catalyst is present as a halogen. In a further embodiment, the catalyst comprises at least two metal selected from Mg, Ti, and Hf, and optionally Zr.

In one embodiment, for an inventive process, the catalyst is produced by spray drying a solution comprising the active metals of the catalyst in an alcoholic solvent, and then subsequently halogenating the active metals.

Another embodiment provides an olefin-based polymer prepared according to the inventive process.

In another embodiment, the olefin-based polymer, and preferably an ethylene-based polymer, has at least a two weight percent fraction (based on the total weight of the polymer) that has a molecular weight of greater than 10⁶ g/mole, as determined by the respective area fractions of either the conventional or LS (Light Scattering) GPC profile of the polymer. In a further embodiment, the respective area fractions are of the conventional GPC profile. In another embodiment, the respective area fractions are of the LS GPC profile.

In one embodiment, for an inventive process, the olefin-based polymer, and preferably an ethylene-based polymer, has at least a four weight percent fraction (based on the total weight of the polymer) that has a molecular weight of greater than 10⁶ g/mole, as determined by the respective area fractions of either the conventional or LS GPC profile of the polymer. In a further embodiment, the respective area fractions are of the conventional GPC profile. In another embodiment, the respective area fractions are of the LS GPC profile.

In one embodiment, for an inventive process, the olefin-based polymer is polymerized in at least one reactor. In a further embodiment, the olefin-based polymer is an ethylene-based polymer.

In one embodiment, for an inventive process, the olefin-based polymer is produced in two reactors. In a further embodiment, a first polymer is produced in a first reactor, and the first polymer is transferred to a second reactor, wherein a lower molecular weight polymer is produced in the presence of the first polymer, to form the olefin-based polymer.

In one embodiment, for an inventive process, the catalyst is fed only to a first reactor. In a further embodiment, the catalyst is fed to more than one reactor.

In one embodiment, for an inventive process, the olefin-based polymer is an ethylene-based polymer. In a further embodiment, the ethylene-based polymer is an ethylene/α-olefin interpolymer. In a further embodiment, the α-olefin is selected from the group consisting of propylene, 1-butene, 1-hexene and 1-octene, preferably 1- butene, 1-hexene and 1-octene, and more preferably 1-butene and 1-hexene.

In preferred embodiments of the invention the gas phase polymerization reactor is run in condensed or super-condensed mode where the average height of the fluidized bed is maintained above the neck of the polymerization reactor and with optional feed of continuity enhancing agents, such as water, alcohols and ketones.

An inventive process may comprise a combination of two or more embodiments as described herein.

The olefin-based polymer of an inventive process may comprise a combination of two or more embodiments as described herein.

In one embodiment, a catalyst used in the invention can be described as a catalyst precursor composition and a final catalyst composition. The catalyst precursor comprises a spray dried composition prepared by dissolution of a magnesium compound, a titanium compound, a hafnium compound, a zirconium compound, or a combination of such compounds in an alcoholic solvent in the presence of a filler/bulking agent. In a further embodiment, the filler or bulking agent is of an average particle size no more than 25 percent of the average particle size of the final catalyst precursor particles. The transition metal compounds may be halides, alkoxides, mixed alkoxide/2,4 pentandionates, or mixtures thereof., provided such compounds are soluble in the alcoholic solvent. Especially preferred titanium compounds are TiCl₃ (either hydrogen or aluminum reduced) and Ti(OR)₄, where R can be ethyl, isopropyl, n-propyl or n-butyl. Preferred Zr and Hf compounds are the chlorides and/or alkoxides (for example, ethoxide, propoxide, butoxide). Preferred magnesium compounds are MgCl₂ and magnesium ethyl carbonate. This catalyst precursor composition is halogenated to produce the final active catalyst used in the invention.

The catalyst composition is of no or very low activity in the absence of cocatalyst. The cocatalyst is a trialkylaluminum compound, especially triethylaluminum, triisobutyl aluminum, tri-n-hexyl aluminum, tri-n-butyl aluminum and tri-n-octyl aluminum, or mixtures thereof. The cocatalyst is chosen to increase or decrease the breadth of the molecular weight distribution, independently of the catalyst formulation. In some embodiments the cocatalyst is added separately to the polymerization reactor, although in other embodiments, the cocatalyst may be mixed with the catalyst feed as both are directly fed into the polymerization reactor. When two reactors are connected in series with catalyst feed only to the first reactor, cocatalyst may optionally be fed only to the first reactor, or a different cocatalyst may be fed to the second reactor.

The invention thus provides a process for producing an olefin-based polymer with a high molecular weight fraction at high polymerization rates, in the absence of, or with minimal, fouling, sheeting or chunking. The process polymerizes at least one monomer, optionally at least one comonomer, in at least one gas phase reactor.

In a further embodiment, the melt flow ratio of the olefin-based polymer is manipulated, independently of reaction conditions, by the trialkylaluminum compound and its concentration in the reactor. In a further embodiment, the olefin-based polymer is an ethylene-based polymer.

In one embodiment, for an inventive process, the trialkylaluminum compound is selected from tri-n-hexylaluminum, triethylaluminum or triisobutylaluminum.

Particularly when produced in multiple reactors, the ethylene based polymer has a high load melt index, I₂₁, of 2 to 200 g/10 min, of 20 to 130 g/10 min, or of 50 to 80 g/10 min.

Particularly when produced in multiple reactors, the ethylene based polymer has a a melt flow ratio, I₂₁/I₂, of 50 to 200, of 78 to 167, or of 90 to 129.

The ethylene-based polymer has a bulk density (or apparent density) from 24 lb/ft³ (0.39 g/cc) to 34 lb/ft³ (0.55 g/cc), preferably from 26 lb/ft³ (0.41 g/cc) to 34 lb/ft³ (0.55 g/cc), as determined by ASTM D-1895. In a further embodiment, the ethylene-based polymer is an ethylene/α-olefin interpolymer. In a further embodiment, the α-olefin is selected from the group consisting of propylene, 1-butene, 1-hexene and 1-octene, preferably 1-butene, 1- hexene and 1-octene, and more preferably 1-butene and 1-hexene.

The invention further provides a reaction product of the polymerization process, comprising a blend, which blend comprises a high molecular weight ethylene-based polymer, and a low molecular weight ethylene-based polymer, and wherein the high molecular weight ethylene-based polymer has a density less than, or equal to, 0.960 g/cm³, and wherein the blend has a high load melt index (I₂₁) greater than, or equal to, 4 g/10 min, and wherein the blend has a molecular weight distribution (M_{w}/Mₙ) greater than, or equal to, 15.

In a further embodiment, a reaction product of the polymerization processes, comprising a blend, which blend consists essentially of a high molecular weight ethylene-based polymer, and a low molecular weight ethylene-based polymer, and wherein the high molecular weight ethylene-based polymer has a density less than, or equal to, 0.960 g/cm³, and wherein the blend has a high load melt index (I₂₁) greater than, or equal to, 4 g/10 min, and wherein the blend has a molecular weight distribution (M_{w}/Mₙ) greater than, or equal to, 15 is provided.

An inventive process may comprise a combination of two or more embodiments as described herein.

The olefin-based polymer of an inventive process may comprise a combination of two or more embodiments as described herein.

### Continuity Aids

It has been previously discovered that select types of continuity aids that both inhibit static generation, as well as prevent formation of sheets and agglomerates, will aid in the production of polymers with very high molecular weight fractions, that is greater than 10⁶ g/mol and preferably as high as 10⁷ g/mol, or more, and in amounts greater than one weight percent, preferably greater than two weight percent, and more preferably greater than or equal to four weight percent, based on the weight of the polymer.

The continuity aid (CA) works particularly well in catalyst systems that have a positive activation energy, that is, those in which the polymerization activity is positively affected by increasing reaction temperature. The invention also works especially well with catalysts that have very low deactivation rates, that is, with first order deactivation rate constants (K_{d}) of < 0.8 Hr ⁻¹, and especially < 0.4 Hr⁻¹. These features, while desirable for high catalyst yield, are especially unwelcome if the system is prone to sheet or agglomerate formation. Any area of poor fluidization or stagnation will then become a prime area for hot spots, sheet and agglomerate formation, since the localized temperature will increase, further increasing the activity of the catalyst in the stagnant zone, leading to polymer fusion and requiring reactor shutdown.

It has been discovered that a continuity aid allows for smooth, trouble free operation of gas phase, fluidized bed polymerization systems while producing polymers with very high molecular weight fractions, in single or multiple linked reactors. These additives are preferably solids, or in solid form, at injection temperature into the reactor, and consist of compounds of the general formulas: (R1CO₂)₂ AlOH (formula (I)) where R1 is a hydrocarbon radical containing from 13 to 25 carbons, and (R2)ₓN(R3OH)_{y}, (formula (II)), where R2 is a hydrocarbon radical containing from 14 to 26 carbons, R3 is a hydrocarbon radical containing from 1 to 4 carbons, x + y = 3 and x has a value of 1 or 2. These additives function even in the presence of cocatalysts (typically trialkyl aluminum compounds), which are generally required to achieve full activity of Ziegler-Natta type catalysts, despite the presence of functionalities that would normally be reactive with the cocatalysts, for example, carbonyl, hydroxyl and amine.

These additives have not been previously tested, however, in condensed or super-condensed mode operation. Nor have they been tested in reactors with diameters greater than 8 feet.

Specific Ziegler-Natta type catalysts are described in U.S. Patent Publication No. 20070060725, which is incorporated herein by reference, along with variations that will be described further herein. In a preferred embodiment, the specific feature shared by the catalysts useful in the invention is the inclusion of Zr and/or Hf active sites, to produce the high molecular weight portion of the polymer, and the alcoholic solvents used in the production of the catalytic solids.

Compounds of the form ROH are also known to be pro-static agents, thus using ROH compounds as solvents in the catalyst preparation process further increases the potential for high levels of static. Resins with very high molecular weights are also known to generate higher levels of static charging during production in gas phase fluidized bed reactors. Thus, while the resins are highly desirable, production of these materials is rendered much more difficult, due to the aforementioned attributes of the catalyst system and the specific resin. It has been discovered that the introduction of continuity aid to the polymerization reactor results in smooth, continuous operations, with minimal formation of agglomerates, and essential elimination of sheeting and chunk formation when operation occurs in what is known as "dry mode," i.e., wherein no condensation of cycle gas occurs.

Based on one set of measurements, continuity additives appear to minimize static generation, however, the simple minimization of static is not sufficient to prevent agglomerate/sheet formation, since the mere cessation of continuity aid (CA) feed, even with minimal static voltage, can result in rapid sheet formation and reactor shutdown. Thus, the use of the CA allows for the continuous production of the polymers.

As described previously, CA is generally a mixture of two components, both relatively high molecular weight compounds containing amino and/or hydroxyl functionalities.

The CA compounds are preferably solids or waxes. The preferred hydroxyl functionality is introduced as a compound of formula (I), ((R1CO₂)₂AlOH), where R1 is a hydrocarbon radical from 13 to 25 carbons. The amino functionality is introduced as a compound of the formula (II), (R2)ₓN(R3OH)_{y}, where R2 is a hydrocarbon radical from 14 to 26 carbons, and R3 is a hydrocarbon radical, for example, methyl, ethyl, n-propyl, n-butyl or isopropyl radical. Particularly preferred compounds are aluminum distearate and Atmer^{™} AS-990 (a stearyl ethoxyamine).

In one embodiment, the ratio of [(RCO₂)₂AlOH) to (R2)ₓN(R3OH)_{y}] in the CA may range from "0.5 to 1" to "2 to 1" and is preferably "0.5 to 1" to "1 to 1" by weight. In a further embodiment, the mixture is fed directly to the polymerizing reactor bed. An especially preferred ratio is about 1 to 1.

In one embodiment, these components are fed as a slurry of the two solid components [(RCO₂)₂AlOH) and (R2)ₓN(R3OH)_{y}]. Mineral oil solvents, such as Hydrobrite 380, Kaydol and similar viscosity materials, are preferred carriers of the CA.

In some embodiments, the CA feed should be maintained at a temperature sufficiently low, such that both components remain as solids prior to feed into the reactor.

The preferred location for the CA feed is above the distributor plate, and in the lower 1/3 portion of the polymerizing bed, that is, the region wherein sheets are most likely to form. An effective amount of this material is fed to the reactor to promote good operation and minimize sheet and agglomerate formation in the reactor. If series reactor operation is practiced, that is, where the contents of a first gas phase reactor are passed into a second gas phase reactor, the CA is typically fed only to the first reactor in the series.

The CA and the catalyst are preferably fed at different locations in the reactor, that is, with some vertical distance separating the two, or, if fed at the same level in the fluidized bed, the injection points should preferably be at least π/2 radians separated.

The CA and catalyst should not be physically mixed. Cocatalyst is also preferably injected directly into the fluidizing bed, however this is more for process safety issues.

When injected into the bed, the cocatalyst should be separated, preferably by at least π/2 radians, from the CA (when injected at the same level), or with vertical displacement from the CA. The cocatalyst and CA is preferably not fed as a mixed stream.

### Continuity Enhancing Agents

Optional continuity enhancing agents are preferably added as vapor in a stream of inert gas, such as nitrogen due to the very low amounts that are effective in enhancing reactor continuity, particularly within condensed mode operation. Liquid phase feed may also be conducted. However, the liquid feed should be directed into the recycle gas stream to allow for proper dispersion prior to the enhancing agent entering the fluidized bed. Continuity enhancing agents are selected from the groups described in European Patent No. 315192 and U.S. Patent No. 4,855,370, the disclosures of which are incorporated herein by reference. Especially preferred agents are water and methanol or ethanol. One method to inject the agent into the recycle line is to maintain the continuity enhancing agent in liquid form at controlled temperature, typically 20 to 35 °C, and to then pass inert gas, typically nitrogen, through the liquid continuity enhancing agent to saturate the gas with the continuity enhancing agent. The saturated gas is then fed to the reactor. Such method allows for more precise control of continuity enhancing agent feed as well as excellent dispersion within the recycle gas.

### Operation in Condensed or Super-Condensed Mode

Condensed mode and super-condensed mode are described in numerous patents, including U.S. Patent Nos. 5,352,749; 5,436,304; 4,543,399; 4,588,790 and 4,933,149; and European Patent 241947, the disclosures of which are each incorporated herein by reference.

### Preferred Catalysts

The expression "catalyst" or "catalyst composition" or "catalyst precursor," as used herein, refers to transition metal compounds, or mixtures thereof, that are useful in catalyzing the polymerization of addition polymerizable monomers, generally in combination with one or more cocatalysts or activator compounds. Preferred catalysts are mixtures or complexes of non-metallocene transition metal compounds and magnesium compounds, such as magnesium chloride compounds, alternatively referred to as Ziegler-Natta catalysts or Ziegler-Natta type catalysts.

More specifically, the preferred catalyst compositions comprise magnesium dichloride or a magnesium compound that can be halogenated to magnesium dichloride, and having supported thereon a mixture of Group 4 metals, especially a mixture of titanium chlorides, zirconium chlorides and hafnium chlorides, combinations thereof, and titanium, zirconium and hafnium compounds that can be halogenated to the respective chloride. The preferred method of preparation is by spray drying a solution comprising magnesium compound and the mixture of Group 4 metal compounds in a primary diluent, especially a diluent comprising one or more C2-C6 alcohols, and subsequently halogenating the resulting solid particles. Preferred transition metal halides are a mixture of titanium trichloride (which may be complexed with AlCl₃ if desired), zirconium tetrachloride and hafnium tetrachloride.

Preferred compounds that may be halogenated to the respective chloride include:
magnesium ethyl carbonate, magnesium ethoxide, Hf(OR)(₄₋ₓ)Clₓ, where x is from 2 to 4, and R is methyl, ethyl, isopropyl, isobutyl or butyl, Ti(OR)_{(4-y)}Cl_{y}, where y is 0 to 2 and R is methyl, ethyl, isopropyl, isobutyl or butyl, Ti(R₁)_{(4-y)}R_{2y}, where y is 0 to 2 and R₁ is a chelating ligand such as 2,4 pentanedionate and R₂ is Cl or OR as described above and Titanium +3 Chloride, either as the aluminum activated or hydrogen reduced form; Zr(OR)_{(4-z)}Cl_{z}, where z is 2 to 4 and R is methyl, ethyl, isopropyl, isobutyl or butyl.

Preferably, the subsequent spray dried material be dry and free flowing to allow for subsequent operations.

Preferred halogenating agents are organoaluminum halides, especially alkylaluminum sesquichlorides, such as ethylaluminum sesquichloride (Al₂(C₂H₅ )₃Cl₃) (EASC) or isobutylaluminum sesquichloride Al₂(iC₄H₁₀ )₃Cl₃).

The preferred catalysts for use in the invention also have several additional attributes, as follows: (a) they produce polymers with high molecular weight fractions greater than 10⁶ g/mole and particularly >10⁷ g/mole, or greater; (b) they have a relatively low K_{d}, that is, a first order deactivation constant of less than 0.8 Hr⁻¹ and most preferably less than 0.4 Hr⁻¹; (c) the catalyst particle size distribution has the span "(D90-D10)/D50" less than, or equal to, 2; and (d) they produce resins with high settled bulk density and low fines levels.

The preferred catalysts are also quite active at low added cocatalyst levels, with excellent polymerization activity occurring with added (via cocatalyst feed) Al/Ti mole ratios in the reactor of less than 25/1, and as low as 10/1, although higher amounts may be used. When used in multiple reactor systems, the preferred catalysts may retain full polymerization activity in the subsequent reactor(s), even in the absence of additional cocatalyst feed.

The expression "catalyst" or "catalyst composition," as used herein, refers to transition metal compounds, or mixtures thereof, that are useful in catalyzing the polymerization of addition polymerizable monomers, generally in combination with one or more cocatalysts or activator compounds. Preferred catalysts are mixtures or complexes of non-metallocene transition metal compounds and magnesium compounds, such as magnesium chloride compounds, alternatively referred to as Ziegler Natta catalysts or Ziegler Natta type catalysts.

The term "procatalyst" as used herein relates to a catalyst composition ready to be injected or fed into the reactor that is subsequently activated to an active polymerization catalyst within the reactor by an additional component such as an aluminum alkyl cocatalyst.

The terms "precursor" and "catalyst precursor" as used herein relate to a portion of the catalyst composition containing the transition metals that is subjected to an additional reaction step to convert it into a Procatalyst as describe above.

More specifically, the preferred catalyst compositions comprise magnesium dichloride or a magnesium compound that can be halogenated to magnesium dichloride, and having supported thereon a mixture of Group 4 metals, especially a mixture of titanium chlorides, zirconium chlorides and hafnium chlorides, combinations thereof, and titanium, zirconium and hafnium compounds that can be halogenated to the respective chloride. Although impregnation in an inert support may be practiced, the preferred method of preparation is by spray drying a solution comprising magnesium compound and the mixture of Group 4 metal compounds in a primary diluent, especially a diluent comprising one or more C2-C6 alcohols, and subsequently halogenating the resulting solid particles. Preferred transition metal halides are a mixture of titanium trichloride (which may be complexed with AlCl₃ if desired), zirconium tetrachloride and hafnium tetrachloride.

The preferred catalysts are prepared first by preparation of a catalyst precursor composition by dissolution of a magnesium compound, a titanium compound, a hafnium compound and/or a zirconium compound in an alcoholic solvent in the presence of a filler/bulking agent, if the composition is spray dried, or a support, such as a highly porous silica gel if the catalyst is physically contained within the pores of said support. The transition metal compounds may be halides, alkoxides, mixed alkoxide/2,4 pentandionates, and mixtures of such. The only requirement is solubility in the alcoholic solvent. Especially preferred titanium compounds are TiCl₃ (either hydrogen reduced or aluminum activated (AA)) and Ti(2,4 pentanedionate)₂(OR₃)₂, where R₃ can be ethyl, isopropyl, n-propyl or n-butyl. Preferred Zr and Hf compounds are the chlorides or mixed alkoxy chlorides as defined above (for example, ethoxide, propoxide, butoxide). Preferred magnesium compounds are MgCl₂ and magnesium ethyl carbonate and mixtures thereof.

Preferred alcohols for use as the solvent are ethanol, propanol, isopropanol and butanol. Higher alcohols, although feasible for solution preparation, are of such high boiling point that removal via spray drying may be difficult. C2 through C4 alcohols are preferred and ethanol and n-butanol are especially preferred solvents in some embodiments of the invention.

Additional optional components of the composition used to form the spray-dried catalyst precursors include the following: a) one or more fillers or bulking agents; and b) one or more secondary diluent compounds selected from the group consisting of siloxanes, polyalkylene glycols, Cl-4 alkyl or phenyl ether or diether derivatives of polyalkylene glycols, and crown ethers.

Any solid finely dispersed material that is inert to the other components of the catalyst system and subsequent polymerization reaction, may be employed as filler or bulking agent for the present compositions. Desirably, the filler provides bulk and strength to the resulting solid, spray-dried particles to prevent particle disintegration upon particle formation, drying and subsequent conversion from precursor to procatalyst. Suitable fillers can be organic or inorganic. Example fillers include silica, (especially fumed silica), boron nitride, titanium dioxide, zinc oxide, polystyrene, and calcium carbonate. Fumed hydrophobic, surface modified, silica imparts high viscosity to the slurry and good strength to the spray-dried particles and is preferred in some embodiments of the invention. The filler may be free of absorbed water, and is desirably surface modified. Surface modification, such as silane treatment, removes reactive hydroxyl or other functional groups from the filler.

The filler is not utilized to provide an inert support for deposition of catalyst composition. Accordingly, high surface area filler materials are not essential or desired for use. Ideally, the filler should have a surface area less than 20 m²/g, less than 17 m²/g, or less than 10 m²/g. Suitable fillers may have an average particle size (D50) no greater than 10 µm, no greater than 7 µm, or less than 1 µm. Sufficient filler is preferably employed to produce a slurry suitable for spray-drying, that is, a mixture including a primary diluent that is liquid at normal atmospheric conditions but readily volatilized under reduced pressure or elevated temperature. Desirably, the slurry contains such filler in an amount from 0 percent to 15 percent by weight, alternatively from 2.5 percent to 10 percent by weight. Upon spray-drying, the resulting droplets produce discrete catalyst particles after evaporation of the primary diluent. Desirably, the amount of filler present in the resulting catalyst particles is an amount from 0 to 50 percent, or, alternatively from 10 to 30 percent based on total composition weight. The spray-dried catalyst particles produced in this manner typically have an average particle size (D50) from 5 to 200 µm, from 5 to 75 µm, or alternatively, from 10 to 30 µm.

### Preparation of the Precursor Composition Solution

The preferred components utilized in the precursor solution preparation are the halides of the metals, i.e. MgCl₂, TiCl₃, HfCl₄ and/or ZrCl₄. The Ti⁺⁴ halide is not used in preparation of the precursor compositions due to the violent reaction that will occur when it is mixed with the alcoholic solvent.

Magnesium chloride and titanium trichloride (aluminum activated (AA) or hydrogen reduced) as well as the Hafnium and Zirconium tetrahalides readily dissolve in the alcohol solvent. Such halide compounds will react with the alcohol solvent, but due to the large cation size and the preferred temperatures for the solution preparation (<100°C), such reactions between the halides and alcohol solvent are moderated. Without being bound by any particular theory, it is presently believed that under the conditions utilized in preparation of the catalyst precursors, two halide ions of zirconium or hafnium react with the solvent to form the alkoxy halide compositions. Such reaction further produces HCl which could corrode most process equipment. Generation of corrosive HCl may be avoided by utilization of the Hf(OR)₄ and/or Zr(OR)₄ compounds in the precursor solution preparation. However, use of Hf(OR)₄ and/or Zr(OR)₄ compounds is expensive and results in precursor solutions which are more difficult to spray dry due to the affinity of these compounds for solvents such as alcohols.

In addition, the very high amount of alcohol and alkoxide included in the catalyst particles can result in particle weakness as the alcohol of coordination and alkoxides are removed in the chlorination step and replaced by the smaller Cl ion, in effect weakening the structure of the spray dried particle. Thus, the use of the tetrahalides, particularly the tetrachloride form of the hafnium and zirconium components is generally preferred in embodiments of the invention.

We have found that catalyst precursor solution compositions can be prepared with near neutral acidity through the use of Mg and Ti compounds that are deficient in chloride ions as components in the precursor solution preparation, allowing for use of less corrosion resistant materials in the spray drying process and rendering the recovered solvent from the preferred form of spray drying, i.e.,the closed cycle form in which the solvent is recovered from the inert drying gas and then recycled for reuse. Thus, collection of the recovered solvent and reuse will result in further acidity increases, raising the corrosion potential of the solvent as well as potentially changing the halide balance in the catalyst precursor.

The titanium compound used in the inventive catalyst composition can be either TiCl₃(AlCl₃)_{0.33} or TiCl₃ (obtained by hydrogen reduction of TiCl₄) if present as the halide or a Ti(OR)₄ compound where R is ethyl, isopropyl or butyl. In some embodiments of the invention, TlCl₃(AlCl₃)_{0.33} is preferred as pure TiCl₃ is more expensive. Neither TiCl₃(AlCl₃)_{0.33} nor TiCl₃ contribute acidity to the precursor solution. The Ti(OR)₄ compound, however, will act as an acidity scavenger in which the following reaction is thought, without being bound by any particular theory, to occur:

Ti(OR)₄ + 2 HCl → Ti(OR)₂Cl₂ + 2 ROH

Thus, one mole of the titanate will neutralize the acidity from one mole of Hf or Zr tetrachloride. One advantage of the titanate compounds is that they do not form strong complexes with the alcohol solvent, improving the ability to actually dry the precursor solution to the desired dry powder form of the precursor.

The magnesium compound may also be manipulated to reduce acidity. In particular, compounds such as Mg(OCO₂C₂H₅)₂ may be utilized to reduce acidity. Magnesium alkoxides may also be used in some embodiments of the invention. However compounds such as Mg(OC₂H₅)₂ and other lower alkoxides of magnesium are generally sparingly soluble or insoluble in the preferred alcoholic solvents. Acidity is reduced via the following reaction:

Mg(OCO₂C₂H₅)₂ + 2HCl → MgCl₂+2 CO₂ + 2 C₂H₅OH

The alkyl magnesium carbonates are extremely soluble in ethanol and are used in certain preferred embodiments of the invention. In such instances, the acidity neutralization effectively produces an existing component of the catalyst, i.e. MgCl₂.

### Spray Drying

Spray-drying may be effected by any spray-drying method known in the art. Here, the catalyst precursor composition, consisting of the alcohol solution of the active components plus any bulking agents or fillers, is referred to as the spray drying feedstock.

One example of a suitable spray-drying method comprises atomizing the catalyst composition, optionally with heating, and drying the resulting droplets. Atomization is accomplished by means of any suitable atomizing device to form discrete droplets that upon drying form spherical or nearly spherical shaped particles. Atomization is preferably effected by passing a slurry of the catalyst precursor composition through the atomizing device together with an inert drying gas, that is, a gas which is nonreactive under the conditions employed during atomization, and aids in removal of volatile components. An atomizing nozzle or a centrifugal high speed disc can be employed to effect atomization, whereby there is created a spray or dispersion of droplets of the mixture. The volumetric flow of drying gas considerably exceeds the volumetric flow of the slurry to effect atomization of the slurry and/or evaporation of the liquid medium. Ordinarily the drying gas is heated to a temperature as high as 250 °C to facilitate drying of the slurry; however, if the volumetric flow of drying gas is maintained at a very high level, it is possible to employ lower temperatures. Atomization pressures from 1 to 200 psig (100 to 1.4 MPa) are suitable.

Alternately, reduced pressure in the spray recovery section of the dryer can be employed to effect solid particle formation. Some examples of suitable spray-drying methods suitable for use with the present catalyst composition include those disclosed in U.S. Patent Nos. 5,290,745; 5,652,314; 4,376,062; 4,728,705; 5,604,172; 5,306,350; 4,638,029; 5,716,558 and U.S. Patent Publication No. 20070060725; each of which is incorporated herein by reference.

In a typical commercial production system, the catalyst precursor will be prepared using a closed cycle spray drying system. In a closed cycle system, the drying gas is recycled and the alcoholic solvent is recovered via refrigeration. The drying gas is then reheated and for further drying of the composition.

The preferred method for atomization and drying of the inventive spray drying feedstock composition is through use of a rotary atomizer. Atomization occurs as the spray drying feedstock is introduced onto or into a rotating wheel.

In a rotary atomizer , the wheel is mounted on the end of a spindle that is conical to ease centering, fixing and removal. A locking device is used to secure the wheel to the spindle, with an adequate clearance between the distributor and the wheel. The use of a feed distributor is necessary at high atomizer speeds to minimize vibration that could be caused by feed entering only one portion of the wheel.

The rotational speed of the wheel influences the atomization. Typical peripheral velocities are in the range of 100 to 200 m/s and commercial atomizers will operate at rotational velocities of 6000 to 35000 RPM. Feedstock enters the wheel and exits through either vanes or nozzles in the wheel, generating liquid jets that break up into droplets. Rotary atomizers are generally used for slurry feedstocks and generally provide a narrower particle size distribution than pressure nozzles.

By adjusting the speed of the atomizing wheel and the size of the orifices of the atomizer, employed during spray-drying, it is possible to obtain particles having desired average particle size, for example, from 5-200 µm. By adjusting the composition of the feed to the atomizer, the solidity of the catalyst particles (that is, internal void volume) is affected, which will also affect the final polymer bulk density. Proper control of both the atomization conditions and the feedstock composition results in catalyst precursor particles that have narrow size distributions, low span values, and produce resins with high bulk density. The very high speed of rotation also makes corrosion and the corrosivity of the feedstock a critical concern. Cracking or fracture of the atomizing wheel can result in catastrophic damage, hurling fragments at high velocity, occasionally through the drying chamber causing personal injury. Thus, having low acidity feedstocks is an important consideration.

### Preferred Drying Conditions

Drying conditions are adjusted to produce a dry, free-flowing precursor powder. The outlet temperature of the spray dryer-the temperature of the drying gas as it exits the dryer-is the primary control for solvent removal from the precursor composition. The inlet temperature is adjust to match the desired outlet temperature with the actual feed rate of the precursor composition feedstock. In practice, a desired outlet temperature and feed rate are defined and the inlet temperature to the dryer adjusted as needed.

Typical inlet temperatures range from 250 to 100 °C, from 250 to 200 °C, from 200 to 160 °C, from 180 to 130 °C, or from 145 to 100 °C, depending on drying gas flow rate and feedstock feed rate. Typical outlet temperatures range from 135 to 100 °C and are adjusted to control the residual solvent level in the final particles as well as the stickiness of the particles. One skilled in the art can readily define these balances based upon the particular feedstock composition.

### Precursor Composition

The preferred precursor composition will have the molar formula MgₓTiHf_{y}Zr_{z}, where x is from 1 to 20, y is from 0 to 10 and z is from 0 to 10, with the proviso that y + z is > 0 and is obtained from an essentially acidity neutral feedstock solution. Particularly preferred ranges are x from 3 to 10, y from 0 to 2, and z from 0 to 2.

Once formed, the catalyst precursor composition (which contains Mg/Ti/Hf/Zr) is halogenated, preferably with an alkyl aluminum chloride (AlR₃₋ₓ Clₓ, where x is from 1 to 2), or a boron chloride (i.e. RBCl₂ or BCl₃). The resultant catalyst product after halogenation may be washed to remove reaction products or, preferably, used directly. In those embodiments of the invention in which the titanium compound utilized in the precursor feedstock has a valence state >+3, an alkyl aluminum halogenation agent is used.

### Precursor Conversion to Polymerization Catalyst

A typical, but nonlimiting, halogenation procedure is described below. Dried mineral oil is charged to a clean mix vessel, in an amount sufficient to produce a smooth slurry with the catalyst precursor powder, typically aiming at a 20 to 35 percent by weight slurry.

Once the powder is dispersed, the halogenation agent is added. The material is added at a rate such that excessive reaction does not occur in the mix tank. The amount of material added depends on the desired level of precursor halogenation. Typically, gas will evolve from the reaction of the halogenating agent, e.g., alkyl aluminum chloride, with residual alcohol in the precursor powder.

Agitation is continued for a time sufficient to disperse the reactants. If the temperature in the mix vessel is lower than the desired final reaction temperature, heat is applied to reach the desired final reaction temperature, followed by a hold period at that temperature to complete reaction. Alternately, cooling can be applied at all steps if the halogenation temperature desired is lower than the temperature the reaction mixture reaches adiabatically. The catalyst is then discharged and stored under inert gas prior to use.

In some embodiments of the invention, the halogenation is completed using a light hydrocarbon diluent, such as isopentane or hexane. The slurry may then either be filtered or decanted to remove the light hydrocarbon. Optionally, the filter cake may be washed to further remove any reaction products of the halogenation reaction. Finally, the halogenated precursor composition may either be dried to free flowing solid catalyst or again dispersed in a mineral oil diluent for slurry feed.

A further alternative halogenation procedure can use an in-line, essentially plug flow system, such as that described in U.S. Patent Nos. 6,187,866 and 6,617,405, the disclosure of each being incorporated herein by reference. In embodiments of the invention utilizing an plug flow system, the catalyst precursor powder is first dispersed in a mineral oil, mixed with reactants, and pumped, in-line, into the polymerization reactor. Suitable heating and cooling methods are used to control the actual temperatures of the catalyst, and the time for reactions to proceed is provided as residence time zones (e.g., either small vessels with minimal back-mixing or extended lengths of tubing/piping). The catalyst is then pumped directly into the polymerization reactor.

The conditions used in the halogenation also have an impact on the amount of high molecular weight fraction produced by the catalyst, the inherent polymerization activity of the catalyst at a standard set of conditions, and the final polymer particle size and polymer bulk density.

Both the reducing power and the concentration of the halogenation agent are important in conversion of the precursor to catalyst. Too high a reducing power of the halogenation agent can suppress the activity of the portion of the catalyst that gives a very high molecular weight tail, too little halogenation power results in insufficient catalytic activity. Preferred levels of halogen to residual alkoxide functionality (including both free alcohol remaining in the catalyst precursor particles, as well as alkoxides that may have either formed by reaction of transition metal components with the alcoholic solvent, or have been present as part of the transition metal component, and measured by dissolution of the precursor compound in an aqueous media, such that all alkoxides are converted to the precursor alcohols, and subsequent Gas Chromatographic determination) range from 0.5 to 4 moles of Cl contained in the halogenation agent/mole of alkoxide with a preferred range of 1 to 3.

Preferred halogenation agents are of moderate to low reducing power. Aluminum alkyl halides are particularly preferred with compounds of the general formula AlRₓCl_{y} where x <2 and x+y=3 meeting this requirement. In certain embodiments of the invention, y = 1.5 to 2 and R is an ethyl, n-propyl, n-butyl or isobutyl group. Especially preferred compounds are ethylaluminum sesquichloride and ethylaluminum dichloride.

Cocatalysts are those typical of Ziegler-Natta type catalysts, for example, trialkyl aluminum compounds and dialkylaluminum halides. Preferred cocatalysts include trimethylaluminum, triethylaluminum, tri-n-hexylaluminum and tri-iso-butylaluminum.

### Preferred Polymers

The preferred polymers are those in which the presence of a high molecular weight "tail" is advantageous, that is, resins designed for blow molding applications, pipe, blown films, and the like, where a higher degree of resin swell or melt strength is desired for efficient processing. The process is applicable to production of polymers that contain a measurable fraction of very high molecular weight species of molecular weight greater than 10⁶ g/mol, or 10⁷ g/mol or greater, with mass fraction greater than 1 percent by weight, preferably greater than 2 percent by weight, and more preferably greater than or equal to 4 percent by weight.

Polymers obtainable by the process are described in PCT Publication No. WO2009085922, the disclosure of which is incorporated herein by reference.

Gas phase polymerization is employed, at superatmospheric pressure in the range from 1 psi to 1000 psi (7 kPa to 7MPa), and at temperatures in the range of from 30 °C to 120 °C. Fluidized bed gas phase reaction systems are particularly useful. A conventional gas phase, fluidized bed process is conducted by passing a stream, containing one or more olefin monomers, continuously through a fluidized bed reactor, under reaction conditions sufficient to polymerize the monomer(s), in the presence of an effective amount of catalyst composition, and an activating cocatalyst, and at a velocity sufficient to maintain a bed of solid particles in a suspended condition. A stream containing unreacted monomer is withdrawn from the reactor continuously, compressed, cooled, optionally fully or partially condensed as disclosed in U.S. Patent Nos. 4,543,399; 4,588,790; 5,352,749 and 5,462,999, the disclosures of each of which is incorporated herein by reference, and recycled to the reactor. Product is withdrawn from the reactor, and make-up monomer is added to the recycle stream. In addition, a fluidization aid such as carbon black, silica, clay, or talc may be used, as disclosed in U.S. Patent No. 4,994,534, the disclosure of which is incorporated herein by reference.

Suitable gas phase reaction systems are also described in U.S. Patent No. 5,527,752, the disclosure of which is incorporated herein by reference.

### Definitions

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, melt index, is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this application.

Numerical ranges have been recited, as discussed herein, in reference to density, melt index, weight percent of component and other properties.

The term "polymer" is used herein to indicate, a homopolymer, a copolymer, or a terpolymer. The term "polymer" as used herein includes interpolymers, such as, for example, those made by the copolymerization of ethylene with C3-C10 alpha olefins, or propylene with ethylene and/or C4-C10 alpha olefins.

The term "interpolymer," as used herein, refers to polymers prepared by the polymerization of at least two different types of monomers. The generic term interpolymer thus includes copolymers, employed to refer to polymers prepared from two different types of monomers, and the term also includes polymers prepared from more than two different types of monomers.

The term "olefin-based polymer," as used herein, refers to a polymer that comprises at least a majority mole percent olefin, for example, ethylene, or propylene, or the like, (based on total amount of polymerized monomer), and, optionally, one or more additional comonomers. As known in the art, the polymerized form of the olefin is present in the polymer.

The term "ethylene-based polymer," as used herein, refers to a polymer that comprises at least a majority mole percent ethylene (based on total amount of polymerized monomer), and, optionally, one or more additional comonomers.

The term "ethylene/α-olefin interpolymer," as used herein, refers to an ethylene-based interpolymer that comprises at least a majority mole percent ethylene (based on total amount of polymerized monomer), an α-olefin, and optionally, one or more additional comonomers.

The term "inert gas," as used herein, refers to any gas, inert to the catalyst and reactants at issue. Typically, such term refers to nitrogen and helium, but may also refer to unreactive aliphatic hydrocarbons.

The terms "static level" and "static pattern," as used herein, respectively refer to the static voltage in the reactor bed and the physical appearance of the static voltage trace.

The term "continuity enhancing agent" is synonymous with the term "RSC" utilized in the Brief Description of the Drawings.

### Test Methods

Density Resin density was measured by the Archimedes displacement method, ASTM D 792-00, Method B, in isopropanol. Specimens were measured within one hour of molding, after conditioning in the isopropanol bath at 23°C, for 8 minutes, to achieve thermal equilibrium prior to measurement. The specimens were compression molded according to ASTM D-4703-00, Annex A, with a five minutes initial heating period at about 190 °C, and a 15 °C/min cooling rate per Procedure C. The specimen was cooled to 45°C in the press, with continued cooling until "cool to the touch." Melt Flow Rate by Extrusion Plastomer Melt flow rate measurements for the ethylene-based polymers were performed according to ASTM D-1238-04, Condition 190°C/2.16 kg, Condition 190°C/5 kg and Condition 190°C/21.6 kg, which are known as I₂, I₅ and I₂₁, respectively. Melt flow rate is inversely proportional to the molecular weight of the polymer. Thus, the higher the molecular weight, the lower the melt flow rate, although the relationship is not linear. Melt Flow Ratio (MFR) is the ratio of high load melt flow rate (I₂₁) to melt flow rate (I₂), unless otherwise specified.

### Examples

### Catalyst Precursor Production

Catalyst precursor solution was prepared as follows:
Under inert reaction conditions, components (see Table 1) were charged to a solution preparation vessel referenced to a 1000 kg charge of solvent (ethanol). The ethanol used was specially denatured 2B ethanol obtained from Pharmco-Aaper and Commercial Alcohols containing about 0.5% by weight of toluene and <100 ppm water.

**Table 1**

| **Feedstock Charge** | |
|---|---|
| Ethanol, kg | 1000 |
| MgCl2, kg | 50.34 |
| TiCl3 AA, kg | 20.34 |
| HfCl4, kg | 33.64 |
| Cabosil TS-610, kg | 70.00 |

Ethanol was charged first followed by MgCl₂, HfCl₄ and TiCl₃ (AA). Amounts listed were aim values, some slight losses occurred although the amounts are all within 5% by weight of the amount given. Magnesium chloride was obtained from SRC Chemicals, Hafnium Tetrachloride (containing up to 1% by wt Zirconium) from ATI Wah-Chang and aluminum activated titanium trichloride from W.R. Grace & Co. Cabosil TS-610 (the filler) was obtained from the Cabot Corporation.

The mixture was stirred at 35 to 50 °C under a nitrogen blanket for about 8 hours prior to the start of spray drying. A 2.5 meter Niro Atomizer spray dryer with the FS-15 atomizer was used. Atomizer speed was adjusted to obtain an average particle size of the catalyst precursor of about 30 microns. Inlet temperature was adjusted to achieve an outlet temperature of 105 to 110 °C and the feedstock was spray dried at a rate of 100 to 150 kg/hr.

Particle size data was determined using a Malvern Mastersizer 2000 particle size analyzer and is given in the Table 2. Heptane was used as dispersant and the General Purpose (Spherical) particle model was used to calculate particle size. Sonication was utilized (50% power, 30 to 60 seconds) to break up any agglomerates that might have formed in the sampling process.

**Table 2**

| Particle Size Microns | Volume % |
|---|---|
| 0.55 | 0.07 |
| 0.63 | 0.1 |
| 0.724 | 0.12 |
| 0.832 | 0.15 |
| 0.955 | 0.18 |
| 1.096 | 0.21 |
| 1.259 | 0.23 |
| 1.445 | 0.24 |
| 1.66 | 0.22 |
| 1.905 | 0.21 |
| 2.188 | 0.23 |
| 2.512 | 0.3 |
| 2.884 | 0.45 |
| 3.311 | 0.7 |
| 3.802 | 1.05 |
| 4.365 | 1.49 |
| 5.012 | 1.95 |
| 5.754 | 2.4 |
| 6.607 | 2.76 |
| 7.586 | 2.99 |
| 8.71 | 3.07 |
| 10 | 3.02 |
| 11.482 | 2.91 |
| 13.183 | 2.85 |
| 15.136 | 2.93 |
| 17.378 | 3.24 |
| 19.953 | 3.81 |
| 22.909 | 4.63 |
| 26.203 | 5.58 |
| 30.2 | 6.52 |
| 34.674 | 7.26 |
| 39.811 | 7.64 |
| 45.709 | 7.52 |
| 52.481 | 6.88 |
| 60.256 | 5.8 |
| 69.183 | 4.45 |
| 79.433 | 3.03 |
| 91.201 | 1.75 |
| 104.713 | 0.73 |
| 120.226 | 0.11 |

The precursor powder was first dispersed in isopentane, then the halogenation agent, ethylaluminum sesquichloride (EASC), was added at a 2.0 "Cl to ethoxide" molar ratio. The slurry was mixed at 35 °C for one hour, and then the solids allowed to settle. The supernatant liquid was decanted, an additional volume of isopentane was added, and the step repeated two additional times. Hydrobrite 380 mineral oil was then added to produce a slurry of halogenated catalyst precursor. Vacuum was drawn on the slurry for approximately one hour to evaporate additional isopentane prior to use. The precursor had an ethoxide content of approximately 25% (ranging from 24 to 27%).

### Polymerization

### Comparative Example 1

Polymerization was started on an existing commercial reactor normally capable of producing 10 to 25 tonnes/hour of polymer. Catalyst was present as a 21 wt% slurry in mineral oil. The reactor was initially under nitrogen pressure. Ethylene partial pressure was slowly increased to about 10 psia, then continually increased to about 65 psia. Catalyst feed began at 20 pounds/hour and was increased to 25 pounds/hour over a 3 to 4 hour period. Continuity aid (a 50/50 by weight mixture of aluminum distearate and diethoxyalted stearyl amine) was fed to the reactor to achieve an approximately 20 ppm by weight in the bed. Reactor temperature was maintained at 82 °C. Hydrogen was introduced into the reactor for molecular weight control and a mole ratio H₂/C₂ of about 0.12 was maintained. Hexene was introduced to keep an hexene/ethylene mole ratio of 0.008 to 0.010. Triethylaluminum cocatalyst was fed to maintain an approximately 15 to 20 added aluminum/titanium mole ratio based on catalyst feed.

The level of the fluidized bed was maintained at 3 to 4 feet below the neck of the reactor. Reaction commenced smoothly. Some positive static was observed as catalyst feed commenced, increasing to >1000 volts.

Condensing mode was achieved within 4 hours of start of catalyst feed. Some skin thermocouple activity began to occur.

As reaction continued, Continuity Aid feed was continued and bed level was slowly allowed to rise to with about 2 feet of the neck of the reactor.

Positive skin thermocouples were observed and shortly thereafter, even when in condensed mode, massive sheeting occurred plugging all reactor product discharge systems and requiring complete shutdown of the reactor system for cleaning.

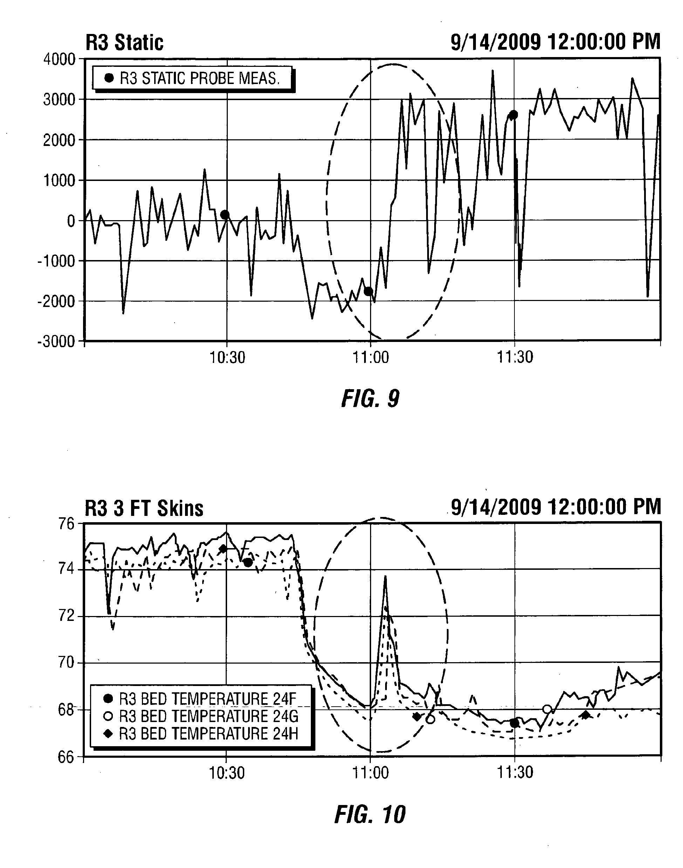

Fig. 9 illustrates reactor static during startup for comparative example 1. The area within the dashed lines indicates when ethylene feed was first begun to the reactor. Positive static was observed which is typically not viewed as a problem in pilot scale reactors.

Fig. 10 also depicts comparative example 1. Specifically, skin thermocouples exhibited cold banding. On initiation of ethylene feed, sudden warming was observed, and the skin thermocouples went back into cold banding.

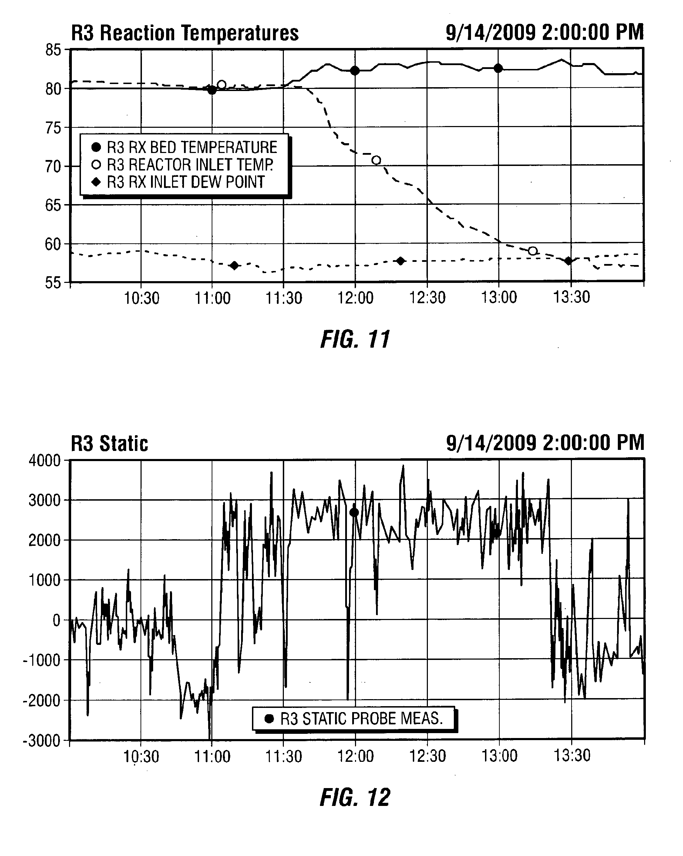

FIG. 11 depicts the smooth onset of reaction as catalyst feed is begun and the transition from "dry mode" to condensed mode.

Referring to Fig. 12, note the sudden decrease in static as the reactor entered condensed mode. Continuity enhancing agent feed was relatively constant at about 20 ppm based on bed weight.

### Comparative Example 2

Polymerization was begun essentially in an identical manner to comparative example 1 except that the catalyst feed rate was started at 25 pph (parts per hour) and the Continuity Aid feed was somewhat higher initially such that when at full normal rates of 20 to 25 tons/hour that the CA feed concentration would be 20 to 30 ppm.

Bed height was increased to within 1 foot of the neck of the reactor. Again, both positive static and sheeting were encountered requiring reactor shutdown to clean the product discharge systems that were fouled.

### Inventive Example 1

The polymerizing bed from Comparative Example 2 was used in the reaction startup for Inventive Example 1. Polymerization was begun in a manner similar to comparative example 2 except the differences as described. Continuity Aid feed was started at an aim 3 ppm based on estimated production rates to account for the higher level of Continuity Aid present in the startup bed. Bed level was maintained at a level above the neck of the reactor on startup and increased to a level > 1 foot above the neck (range of 1 to 2 feet above the neck). CA feed was slowly increased as the level in the bed decreased as reaction started and fresh resin was produced to an aim level of 10 ppm within the bed.

Positive static was observed and some skin thermocouples began to go positive, even after the reactor was well into condensing mode.

Continuity enhancing agent feed (i.e., water) was begun to reduce the positive static and CA feed was decreased to an aim of 5 ppm in the bed.

Production rate was further increased to > 20 tons/hour and the reactor ran continuously without shutdown for 4.5 days while making the desirable high molecular weight resin with a high molecular weight tail until the reaction system was voluntarily shutdown.

The contents of the first reactor were transferred via a batch product discharge system into a second reactor running at different reaction conditions to produce the final desired product, a blow molding resin with superior properties.

The second reactor also was run at a bed level above the neck of the reactor to avoid formation of sheets. Catalyst was fed only to the first reactor. Cocatalyst was fed to both reactors to maintain Al/Ti ratio in the 15 to 25 range. Table 3 includes the conditions of the polymerization reactors as well as the resulting resin properties for Inventive Example 1.

**Table 3**

| **Reactor Conditions** | **1st Reactor** | **2nd Reactor** |
|---|---|---|
| Temperature (°C) | 82 | 110 |
| Pressure (psig) | 269 | 426 |
| C2 PP (psi) | 61.2 | 103.9 |
| H2/C2 | 0.126 | 1.29 |
| C4/C2 | 0.000 | 0.00 |
| C6/C2 | 0.009 | 0.001 |
| IC5% | 17.01 | 6.53 |
| Production Rate (Mlbs/hr) | 42.5 | 38.7 |
| Catalyst Feed | 25.8 | |
| Bed Weight (Mlbs) | 141.3 | 220 |
| Upper FBD (lbs/ft^3) | 19.6 | 20.7 |
| Middle FBD | 19.5 | 21.0 |
| Lower FBD (lbs/ft^3) | 20.7 | 21.9 |
| DSC Bed Level | 37.1 | 48.1 |
| Residence Time(hr) | 3.3 | 2.7 |
| STY (lb/hr/ft^3) | 6.2 | 3.9 |
| SGV (ft/s) | 1.65 | 2.04 |
| % Condensing | 8.08 | 0.00 |
| Gas Density(lb/ft^3) | 1.50 | 1.39 |
| Split | 0.523 | 0.477 |
| Split (Ti Balance) | 0.522 | 0.478 |
| C2 Split | 0.518 | 0.482 |

| **Resin Analysis** | | |
|---|---|---|
| Ti (ppmw) | 3.56 | 1.86 |
| Al/Ti | 20.0 | 22.9 |
| Melt Index (12) | | 0.24 |
| Flow Index (121) | 0.73 | 26.80 |
| MFR (I21/I2) | | 108.6 |
| Density, g/cc | 0.9397 | 0.9568 |
| Bulk Density (lb/ft^3) | 24.6 | 29.3 |
| APS (in) | 0.039 | 0.040 |
| Fines | 0.7 | 0.7 |

The skin thermocouples (TC) extend approximately ¼ inch into the reactor and are thus very sensitive to adhering polymer particles (fines and the like). Deviations higher than the average bed temperature (measured using a resistance thermometer that extends about 6 inches into the fluidized bed) are generally considered signs of incipient sheeting. Extreme negative deviations (also called cold-banding) indicate formation of a stagnant layer on the reactor wall. Skin thermocouples ideally are tightly clustered as to value and generally about 5 to < 10 °C lower than the measured bed temperature.

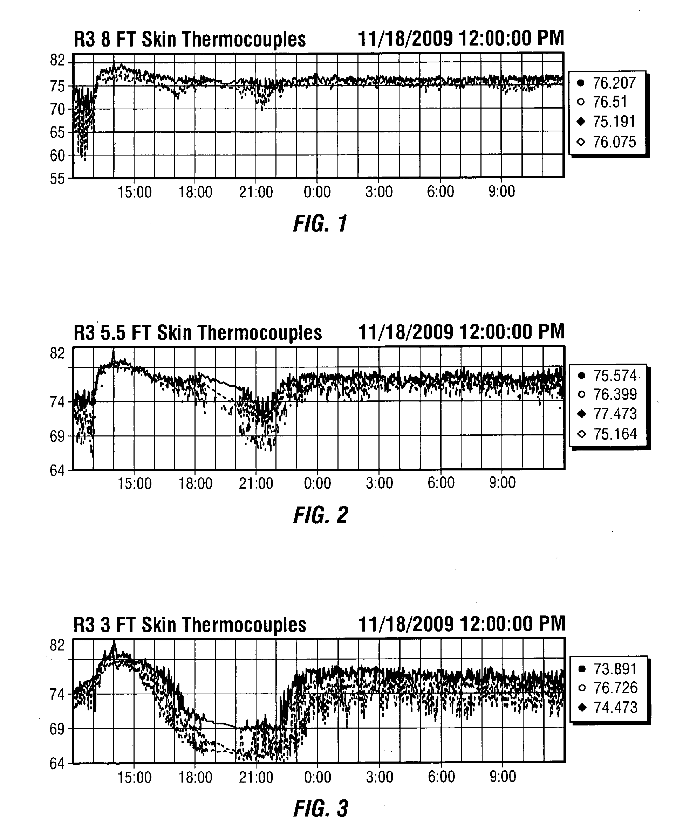

At 2200 hours on Figs. 1 - 3, the CA feed was decreased from 10 ppm to 5 ppm and water addition was begun. Note the rapid return of skin thermocouples into a tighter cluster that is slightly below the bed temperature (82 °C). The use of both CA and RSC was required to bring skin TCs back into a cluster. Once this occurred and they were held there, rubble generation slowed, and eventually ceased.

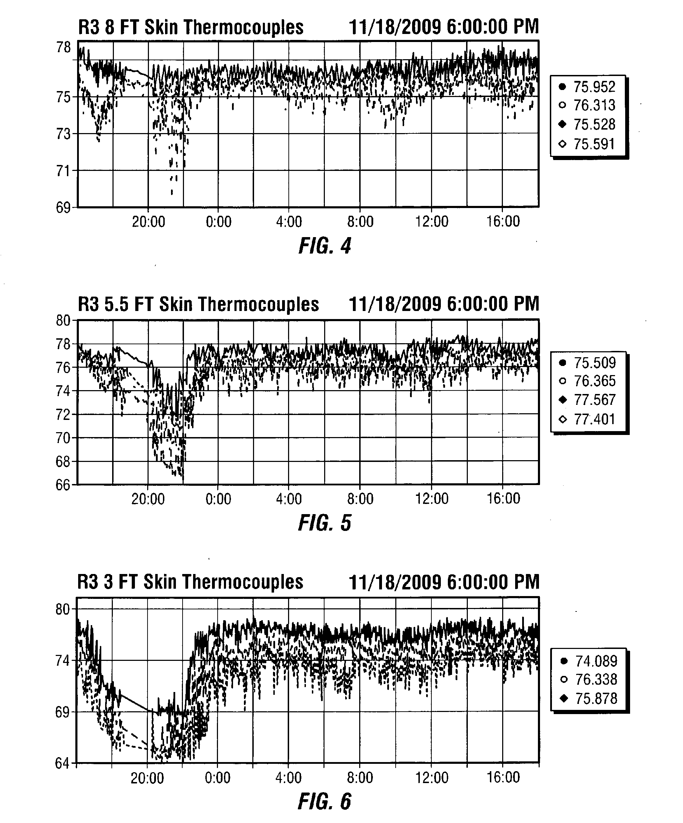

Figs. 4 - 7 show the effect of addition of Continuity Aid and Reactor Static Control (RSC) on Skin Thermocouples and static in the first reactor of a dual reactor system in which the first reactor is producing a very high molecular weight resin. Cold bands have disappeared and there are no hot bands, indicative of good operation.

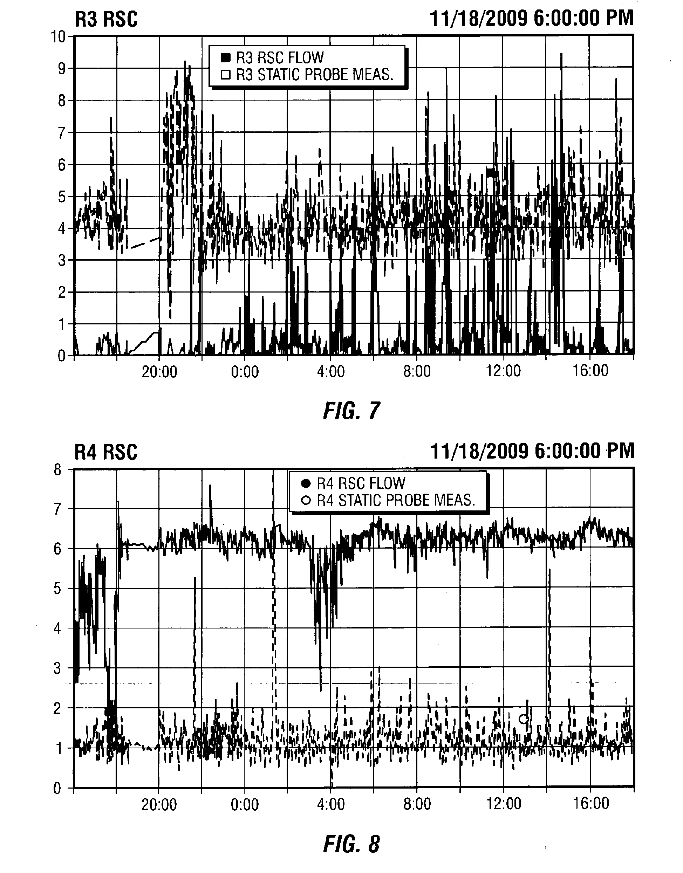

Referring to Fig. 7 and 8, RSC flow is measured in pounds/hour of nitrogen gas passing through a vessel containing water maintained at about 25 °C. Due to the low flow rate, the actual control of the gas was difficult, leading to the spiking observed in Fig. 7. However, note the rapid response of the Static Probe to initiation of water feed.

Fig. 8 shows the use of RSC in the second reactor of a staged reactor system. Resin transferred from the first reactor to the second reactor can cause excess static in the second reactor. Although sheeting in the second reactor is somewhat less likely, high levels of static are generally indicators of potential sheet formation. RSC addition in the second reactor maintained static in a relatively tight bandwidth with no formation of agglomerates or sheets once the reactor bed level was adjusted to the desired level of at least one foot above the neck of the reactor.

## Claims

1. A process for producing an olefin-based polymer, said process comprising polymerizing, in a polymerization reactor including a fluidized bed, a disengaging section and a neck connecting the bed and disengaging section, at least one monomer, in the gas phase, in the presence of at least the following components:
A) at least one catalyst containing at least two transition metals, one of the at least two transition metals being Ti;
B) at least one cocatalyst;
C) a composition comprising at least one compound selected from formula (I), and/or at least one compound selected from formula (II);
wherein (R1CO₂)₂ AlOH = formula (I), (R2)ₓN(R3OH)_{y} = formula (II), R1 is a hydrocarbon radical containing from 13 to 25 carbons, R2 is a hydrocarbon radical containing from 14 to 26 carbons, R3 is a hydrocarbon radical containing from 1 to 4 carbons; and x + y = 3, and x has a value of 1 or 2; and
further wherein the reactor is operated in a condensed mode and the average height of the fluidized bed is maintained above the neck of the polymerization reactor.

2. The process of claim 1 wherein the polymerization occurs further in the presence of an effective amount of continuity enhancing agent.

3. The process of claim 1 wherein the polymerization occurs further in the presence of water.

4. The process of claim 1 wherein the polymerization occurs further in the presence of methanol, ethanol, isopropanol or a mixture of any thereof.

5. The process of claim 1 wherein the catalyst is a Ziegler-Natta type catalyst

6. The process of claim 1 wherein the cocatalyst is a trialkylaluminum compound.

7. The process of claim 1 wherein the component (C) is added continuously to the polymerization reactor.

8. The process of claim 2 wherein the continuity enhancing agent is continuously added to the polymerization reactor.

9. The process of claim 4 wherein the continuity enhancing agent is continuously added to the polymerization reactor.

10. The reaction product of the process of claim 1 comprising a blend, which blend comprises a high molecular weight ethylene-based polymer, and a low molecular weight ethylene-based polymer, and wherein the high molecular weight ethylene-based polymer has a density less than, or equal to, 0.960 g/cm³, and wherein the blend has a high load melt index (I₂₁) greater than, or equal to, 4 g/10 min, and wherein the blend has a molecular weight distribution (M_{w}/Mₙ) greater than, or equal to, 15.

11. The process of claim 1 wherein the process is conducted in multiple reactors in series.

## Patentansprüche

1. Verfahren zur Herstellung eines olefinbasierten Polymers, wobei das Verfahren Polymerisieren wenigstens eines Monomers in einem Polymerisationsreaktor umfassend ein Wirbelbett, einen Auslöseabschnitt und einen Hals, der das Bett und den Auslöseabschnitt verbindet, in der Gasphase, in Gegenwart von wenigstens den folgenden Komponenten umfasst:
A) wenigstens ein Katalysator, der wenigstens zwei Übergangsmetalle enthält, wobei eines der wenigstens zwei Übergangsmetalle Ti ist;
B) wenigstens ein Co-Katalysator;
C) eine Zusammensetzung umfassend wenigstens eine Verbindung ausgewählt aus Formel (I), und/oder wenigstens eine Verbindung ausgewählt aus Formel (II); wobei (R1CO₂)₂ AlOH = Formel (I), (R2)ₓN(R3OH)_{y} = Formel (II), R1 ein Kohlenwasserstoffradikal ist, das von 13 bis 25 Kohlenstoffe enthält, R2 ein Kohlenwasserstoffradikal ist, das von 14 bis 26 Kohlenstoffe enthält; R3 ein Kohlenwasserstoffradikal ist, das von 1 bis 4 Kohlenstoffe enthält; und x + y = 3, und x einen Wert von 1 oder 2 aufweist; und
wobei weiter der Reaktor in einem kondensierten Modus (condensed mode) betrieben wird und die durchschnittliche Höhe des Wirbelbetts über dem Hals des Polymerisationsreaktors gehalten wird.

2. Verfahren nach Anspruch 1, wobei die Polymerisation weiter in Gegenwart einer wirksamen Menge eines kontinuitätsverstärkenden Mittels (continuity enhancing agent) erfolgt.

3. Verfahren nach Anspruch 1, wobei die Polymerisation weiter in Gegenwart von Wasser erfolgt:

4. Verfahren nach Anspruch 1, wobei die Polymerisation weiter in Gegenwart von Methanol, Ethanol, Isopropanol oder einer beliebigen Mischung davon erfolgt.

5. Verfahren nach Anspruch 1, wobei der Katalysator ein Katalysator vom Ziegler-Natta-Typ ist.

6. Verfahren nach Anspruch 1, wobei der Co-Katalysator eine Trialkylaluminium-Verbindung ist.

7. Verfahren nach Anspruch 1, wobei die Komponente (C) kontinuierlich zu dem Polymerisationsreaktor zugefügt wird.

8. Verfahren nach Anspruch 2, wobei das kontinuitätsverstärkende Mittel kontinuierlich zu dem Polymerisationsreaktor zugefügt wird.

9. Verfahren nach Anspruch 4, wobei das kontinuitätsverstärkende Mittel kontinuierlich zu dem Polymerisationsreaktor zugefügt wird.

10. Reaktionsprodukt des Verfahrens nach Anspruch 1, umfassend eine Mischung, wobei die Mischung ein ethylenbasiertes Polymer mit hohem Molekulargewicht und ein ethylenbasiertes Polymer mit niedrigem Molekulargewicht umfasst, und wobei das ethylenbasierte Polymer mit hohem Molekulargewicht eine Dichte von weniger als oder gleich 0,960 g/cm³ aufweist, und wobei die Mischung einen Hochlast-Schmelzindex (high load melt index) (I₂₁) größer als oder gleich 4 g/10 min aufweist, und wobei die Mischung eine Molekulargewichtsverteilung (M_{w}/Mₙ) von größer als oder gleich 15 aufweist.

11. Verfahren nach Anspruch 1, wobei das Verfahren in mehreren Reaktoren in Serie durchgeführt wird.

## Revendications

1. Un procédé de production d'un polymère à base d'oléfines, ledit procédé comprenant la polymérisation, dans un réacteur de polymérisation comportant un lit fluidisé, une section de dégagement et un col raccordant le lit et la section de dégagement, d'au moins un monomère, en phase gazeuse, en présence d'au moins les constituants suivants :
A) au moins un catalyseur contenant au moins deux métaux de transition, l'un de ces au moins deux métaux de transition étant Ti ;
B) au moins un cocatalyseur ;
C) une composition comprenant au moins un composé sélectionné d'après la formule (I), et/ou au moins un composé sélectionné d'après la formule (II) ;
dans lequel (R1CO₂)₂ AlOH = formule (I), (R2)ₓN(R3OH)_{y} = formule (II), R1 est un radical hydrocarbure contenant de 13 à 25 carbones, R2 est un radical hydrocarbure contenant de 14 à 26 carbones, R3 est un radical hydrocarbure contenant de 1 à 4 carbones ; et x + y = 3, et x a une valeur de 1 ou 2; et
dans lequel, en sus, le réacteur est mis en fonctionnement en mode condensé et la hauteur moyenne du lit fluidisé est maintenue au-dessus du col du réacteur de polymérisation.

2. Le procédé de la revendication 1 dans lequel la polymérisation se produit en sus en présence d'une quantité efficace d'agent améliorant la continuité.

3. Le procédé de la revendication 1 dans lequel la polymérisation se produit en sus en présence d'eau.

4. Le procédé de la revendication 1 dans lequel la polymérisation se produit en sus en présence de méthanol, d'éthanol, d'isopropanol ou d'un mélange de n'importe lesquels de ceux-ci.

5. Le procédé de la revendication 1 dans lequel le catalyseur est un catalyseur de type Ziegler et Natta.

6. Le procédé de la revendication 1 dans lequel le cocatalyseur est un composé trialkylaluminium.

7. Le procédé de la revendication 1 dans lequel le constituant (C) est ajouté de façon continue au réacteur de polymérisation.

8. Le procédé de la revendication 2 dans lequel l'agent améliorant la continuité est ajouté de façon continue au réacteur de polymérisation.

9. Le procédé de la revendication 4 dans lequel l'agent améliorant la continuité est ajouté de façon continue au réacteur de polymérisation.

10. Le produit de réaction du procédé de la revendication 1 comprenant un mélange homogène, mélange homogène qui comprend un polymère à base d'éthylène de masse moléculaire élevée et un polymère à base d'éthylène de faible masse moléculaire, et dans lequel le polymère à base d'éthylène de masse moléculaire élevée a une masse volumique inférieure, ou égale, à 0,960 g/cm³, et dans lequel le mélange homogène a un indice de fluidité à chaud sous forte charge (I₂₁) supérieur, ou égal, à 4 g/10 min, et dans lequel le mélange homogène a une distribution de masses moléculaires (M_{w}/Mₙ) supérieure, ou égale, à 15.

11. Le procédé de la revendication 1, le procédé étant mené dans des réacteurs multiples en série.
